# FASCICULE DE BREVET EUROPEEN

(11) **EP 0 509 889 B1**
(45) Date de publication et mention de la délivrance du brevet: **21.09.1994**
(21) Numéro de dépôt: 92401013.5
(22) Date de dépôt: 10.04.1992
(51) Int. Cl.: B60P 1/64

(54) **Berce bi-standard**
Zwei-Standard-Träger
Two-standard support

(30) Priorité: 19.04.1991 FR 9104868
(43) Date de publication de la demande: 21.10.1992
(73) Titulaire: MARREL, F-42160 Andrézieux-Bouthéon (FR)
(72) Inventeur: Patouillard, Jean Baptiste, F-42390 Villars (FR); Heritier, Albert, F-42340 Veauche (FR)
(74) Mandataire: Rinuy, Santarelli

(56) Documents cités:
- EP-A- 0 404 620
- FR-A- 2 185 520
- FR-A- 2 294 877
- US-A- 4 341 500

## Description

L'invention concerne de manière générale une berce, c'est-à-dire les éléments d'interface qui permettent à une charge, telle qu'une benne, un conteneur, une plate-forme ou analogue, d'être manipulée à l'aide d'un bras de chargement/déchargement (par exemple du type décrit dans le brevet FR-A-2.185.520), en vue de son déchargement au sol, sur un wagon ou sur toute autre surface de réception.

Une telle berce comporte principalement deux longerons horizontaux à une extrémité desquels est fixée une extension verticale terminée par un anneau ou barreau de préhension destiné à coopérer avec le crochet de préhension d'un bras de chargement/déchargement. A cette extension verticale et à ces longerons qui forment la berce (on parle parfois de berce-squelette) est fixé, en pratique par boulonnage ou soudage, le corps de la charge proprement dit.

La manoeuvre d'une telle berce dans de bonnes conditions suppose une parfaite adéquation entre cette berce et le bras avec lequel on le manoeuvre. C'est pourquoi des normes ont été édictées concernant notamment la hauteur de l'anneau ou barreau de préhension par rapport aux longerons et la distance dont cet anneau est en avant par rapport aux extrémités de ces longerons. En pratique, cette distance en avant se mesure par rapport à une traverse destinée, en configuration de chargement de la berce sur un camion, à venir en appui derrière la colonne verticale de ce bras.

Toutefois, ces normes, notamment DIN et AFNOR, ont l'inconvénient de requérir pour les distances précitées des valeurs différentes, de sorte qu'une berce conforme à une norme ne peut correctement être chargée et déchargée que par un bras lui-même conforme à la même norme, ce qui est un handicap important puisque chaque opération de chargement/déchargement, il faut vérifier l'identité des normes et prévoir, dans le cas contraire, de remplacer soit le bras (c'est-à-dire le plus souvent le camion équipé de ce bras), soit la berce.

Il a déjà été proposé, pour échapper à cette exigence d'identité des normes, de rendre ajustable la hauteur du bras et/ou d'agrandir l'ouverture interne du crochet de préhension en sorte de s'adapter à des berces des deux normes, mais cela se traduit par une moindre sécurité lors des manoeuvres et des usures très rapides des pièces en contact.

L'invention a pour objet de pallier ces inconvénients en supprimant les risques d'incompatibilité entre berce et bras malgré la coexistance de deux normes telles que DIN et AFNOR, sans nuire toutefois ni à la sécurité des manoeuvres ni à la durée de vue des éléments en présence.

A la différence des solutions connues où les recherches d'adaptabilité avaient porté sur les bras de chargement/déchargement, l'invention propose par contre de rechercher l'adaptabilité dans les berces.

Plus précisément, l'invention propose une berce amovible comportant deux longerons à une extrémité desquels est fixée une extension verticale portant en son sommet un barreau de préhension, caractérisée en ce que ce barreau est porté par un ensemble porte-barreau comportant un socle fixe sur lequel est monté pivotant, autour d'un axe transversal, avec un débattement angulaire donné, un équipage pivotant dont fait partie ce barreau, ce socle étant muni de moyens de blocage en pivotement de cet équipage pivotant, en une première configuration dans laquelle ce barreau est à une première distance en avant d'une traverse de la berce et à une première hauteur par rapport aux longerons, et en une seconde configuration dans laquelle ce barreau vient en une seconde distance en avant et à une seconde hauteur, ces premières distance et hauteur étant conformes à une première norme et ces secondes distance et hauteur étant conformes à une seconde norme.

Selon des dispositions préférées éventuellement combinées :
- lesdites distance et hauteur sont conformes aux normes DIN et AFNOR,
- le socle fixe comporte deux fentes dans lesquelles coulissent en pivotement deux flasques parallèles raccordés l'un à l'autre par ce barreau,
- ces flasques sont conformés en secteurs angulaires centrés sur l'axe de pivotement, et le barreau de préhension leur est rapporté en des coins supérieurs situés à distance de cet axe,
- l'un de ces flasques comporte un doigt radial adapté à venir circonférentiellement en butée contre une butée escamotable et contre une seconde butée fixe,
- cette butée escamotable est l'extrémité d'une tige parallèle à l'axe de pivotement est commandé en débattement rectiligne selon son axe par une tige de manoeuvre articulée sur le socle,
- les moyens de blocage comportent un doigt parallèle à l'axe de pivotement, ayant un débattement rectiligne selon son axe commandé par une tige de manoeuvre articulée sur le socle et adapté à pénétrer, ou non, dans l'un ou l'autre de deux perçages ménagés dans l'un des flasques, à une même distance de l'axe de pivotement et décalés angulairement d'un angle égal audit débattement angulaire,
- l'un des flasques comporte un doigt radial de positionnement de l'équipage pivotant en l'une ou l'autre de ses configurations, et l'autre flasque comporte deux perçages décalés angulairement autour de l'axe de pivotement d'un angle égal à ce débattement angulaire et adaptés respectivement à recevoir, dans ces configurations, un doigt rétractable de blocage,
- le doigt radial étant adapté à venir circonférentiellement en butée contre une butée fixe et une butée escamotable, cette butée escamotable et ce doigt rétractable de blocage sont attelés à une même tige de manoeuvre articulée sur le socle,
- le socle comporte une pièce en U dont la concavité est tournée vers l'avant de la berce, avec deux ailes longées par les fentes, une paroi de fond et deux plaques horizontales de fixation s'étendent latéralement à l'opposé l'une de l'autre.

Des objets, caractéristiques et avantages de l'invention ressortent de la description qui suit, donnée à titre d'exemple non limitatif, en regard des dessins annexés sur lesquels :
- la figure 1 est une vue de détail, de front, selon la flèche I de la figure 2, d'une berce conforme à l'invention,
- la figure 2 en est une vue partielle de côté selon la flèche II de la figure 1,
- la figure 3 en est une autre vue de côté, après relèvement du barreau de préhension,
- la figure 4 est une vue agrandie, de côté, de l'ensemble porte-barreau dans sa configuration de la figure 2,
- la figure 5 en est une vue de dessus, selon la flèche V de la figure 4,
- la figure 6 en est une vue de face selon la flèche VI de la figure 5, et
- la figure 7 est une vue de l'ensemble porte-barreau analogue à celle de la figure 4 mais dans son autre configuration de la figure 3.

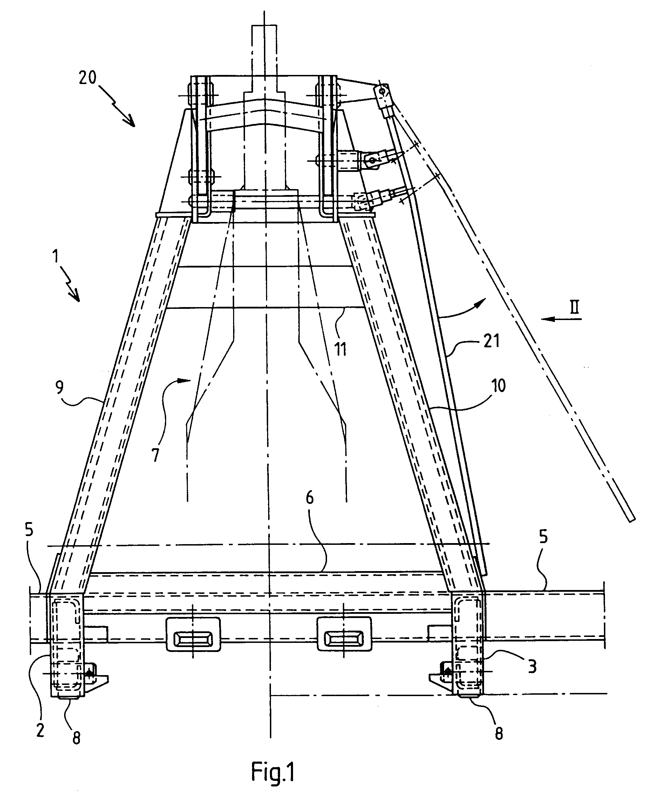

La berce 1 représentée aux figures 1 à 3 comporte, de façon classique, deux longerons 2 et 3 et, à une extrémité, dite extrémité avant, de ces longerons, une extension verticale 4 parfois appelée "clocher". De façon habituelle, la berce comporte des traverses 5 s'étendant latéralement à partir de ces longerons jusqu'à des profilés latéraux non représentés.

Entre les extrémités avant de ces longerons est fixée une traverse de butée 5 adaptée à venir en appui derrière un bras de chargement/déchargement 7 dont seule la partie supérieure est représentée en traits mixtes à la figure 1.

Les flancs inférieurs 8 des longerons par lesquels cette berce peut reposer sur le châssis d'un camion ou tout autre surface porteuse, déterminent un niveau de référence.

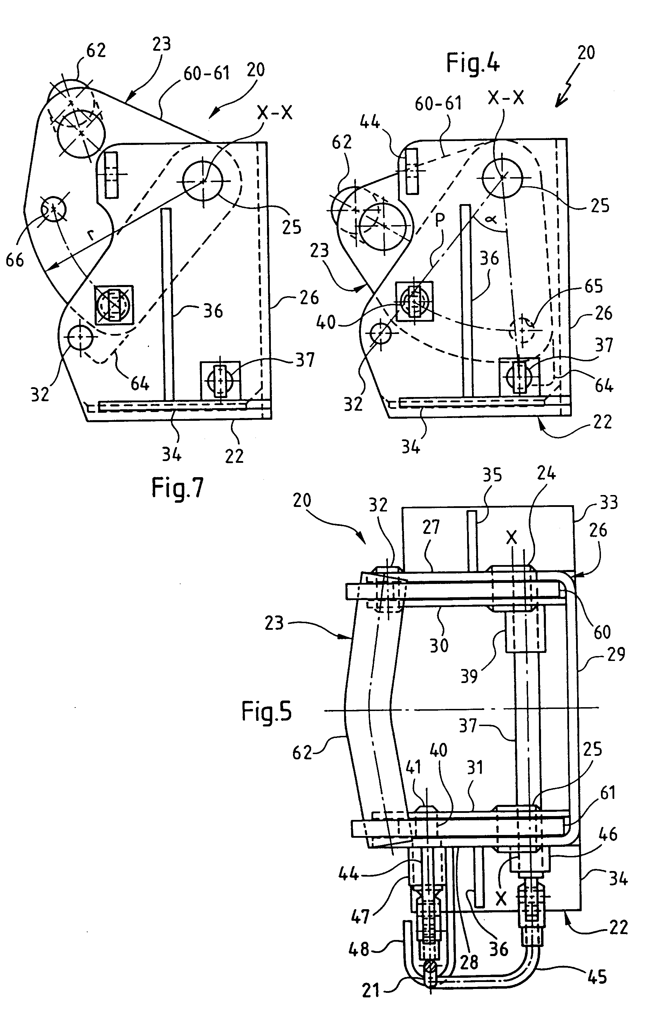

L'extension verticale 4 est formée de deux colonnes inclinées 9 et 10 partant des extrémités avant des longerons et convergeant vers un ensemble porte-barreau 20 représenté plus en détail aux figures 4 à 7. Une traverse 11 relie les colonnes inclinées.

Conformément à l'invention, l'ensemble porte-barreau 20 est articulé et est muni d'une tige de manoeuvre 21 s'étendant vers le bas en longeant ici l'une 10 des colonnes et non représentée aux figures 4 et 7 pour des raisons de lisibilité.

Cet ensemble porte-barreau 20 comporte principalement un socle 22 fixé ici par soudage aux tranches supérieures des colonnes 9 et 10 et un équipage pivotant 23 monté pivotant sur ce socle autour d'un axe horizontal transversal X-X, ici matérialisé par deux rivets 24 et 25 formant doigts de pivotement.

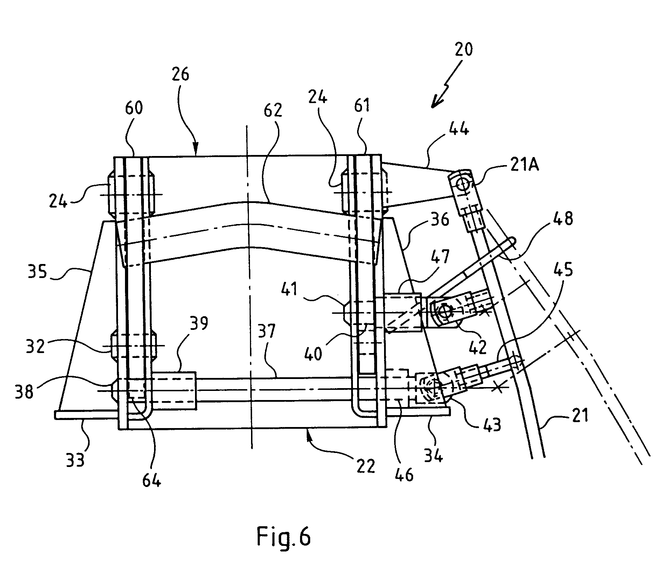

Le socle comporte ici une pièce en U 26 dont la concavité est tournée vers l'avant et qui comporte deux ailes verticales parallèles 27 et 28 raccordées à une paroi verticale de fond 29. Parallèlement à ces ailes parallèles et à l'intérieur de ce U sont fixées des plaques verticales 30 et 31 parallèles déterminant avec ces ailes des fentes destinées à recevoir l'équipage pivotant. Ces ailes et ces plaques sont reliées par les rivets 24 et 25. En outre, l'une 27 des ailes et la plaque associée 30 sont reliées par un rivet de blocage 32 disposé à distance de l'axe X-X. Le bord inférieur des plaques est relié vers les ailes et est affronté à celles-ci (voir la figure 6).

A la base des ailes sont fixées des plaques horizontales de fixation 33 et 34 destinées à être fixées à la tranche des colonnes 9 et 10, et maintenues à angle droit vis à vis des ailes par des entretoises triangulaires de rigidification 35 et 36.

Les ailes 27 et 28 et les plaques verticales 30 et 31 présentent, à égale distance de l'axe X-X que le rivet de blocage 32, des perçages coaxiaux traversés par une tige 37 adaptée à coulisser selon son axe entre une configuration de repos dans laquelle une extrémité libre 38 (voir figure 6) pénètre dans celle des ailes (ici l'aile 27) traversée par le rivet de blocage 32 et une configuration rétractée (non représentée) dans laquette cette extrémité dégage la fente longeant cette aile et s'escamote dans la plaque verticale associée 30. Pour éviter tout échappement de cette extrémité 38 hors de cette plaque, à celle-ci est rapporté, par soudage, un manchon de guidage 39 axé sur l'axe de la tige et dans lequel coulisse celle-ci.

Dans l'aile 28 et la plaque 31 opposées sont en outre prévus des perçages en regard, situés vis à vis de l'axe X-X à une plus faible distance que le rivet de retenue 32 ou la tige 37, dans lesquels est engagé un pion 40 adapté à coulisser selon son axe entre la configuration de repos dans laquelle une extrémité libre 41 de ce pion traverse la plaque 31 et une configuration rétractée dans laquelle cette extrémité dégage la fente entre plaque 31 et aile 28.

En leurs autres extrémités, la tige 37 et le pion 40 sont attelés, par des articulations 42 et 43 d'axes horizontal perpendiculaires à X-X, à la tige de manoeuvre 21 elle-même articulée en son extrémité supérieure 21A à une pièce d'attelage 44 latéralement en saillie vis à vis de l'aile 28, à la partie haute de celle-ci.

En fait, la tige 37 n'étant pas dans un même plan vertical que le pion 40, est raccordée à la tige de manoeuvre 21 par une tige coudée 45.

De même que pour la plaque 30, l'aile 28 porte des manchons de guidage 46 et 47 pour la tige 37 et le pion 40.

On appréciera que, pour manoeuvrer le pion 40 et la tige 37, il suffit d'écarter latéralement la tige 21 (voir la figure 6). Pour éviter tout écartement intempestif excessif, cette tige est engagée dans un arceau 48 fixé à l'aile 28.

On notera que l'axe X-X est situé en haut des ailes 27 et 28 à proximité de la paroi de fond tandis que la tige 37 est située en bas de ces ailes à proximité de la paroi de fond, sensiblement à la verticale sous l'axe X-X.

Quant au rivet de retenue 32 et au doigt 40, ils sont en avant par rapport à cet axe X-X, avec des axes ici sensiblement coplanaires avec l'axe X-X. Le plan P passant par l'axe du rivet de retenue 40 et l'axe X-X fait un angle α d'environ 43° avec le plan P′ passant par l'axe de la tige 37 et l'axe X-X.

L'équipage pivotant 23 comporte deux flasques 60 et 61 engagés dans les fentes ménagées par les ailes 27 et 28 et les plaques 30 et 31 en étant montées pivotantes autour des corps des rivets 24 et 25 matérialisant l'axe X-X.

Ces flasques ont globalement la forme de secteurs de disques, centrés sur X-X et d'amplitude angulaire d'environ 80°.

Ces flasques viennent radialement en saillie hors des fentes du socle et sont attelés l'un à l'autre en pivotement par un barreau de préhension 62 sensiblement parallèle à l'axe X-X et situé dans le coin supérieur des flasques situés à distance de cet axe.

La dimension radiale r des flasques est juste inférieure à la distance entre l'axe X-X et le rivet de retenue 32 ou l'extrémité 38 de la tige 37. Par contre, le flasque (ici 60) situé dans la fente normalement traversée par l'extrémité 38 comporte, le long de son bord vertical, un doigt 64 radialement en saillie adapté à venir circonférentiellement en butée contre l'extrémité 38 ou contre le rivet de retenue 32.

L'autre flasque, 61, comporte deux perçages 65 et 66 (voir les figures 4 et 7) situés vis à vis de l'axe X-X à une même distance que le doigt 40, et décalés angulairement autour de cet axe X-X d'un angle égal à α.

Cet angle α est l'angle de débattement de l'équipage pivotant 23.

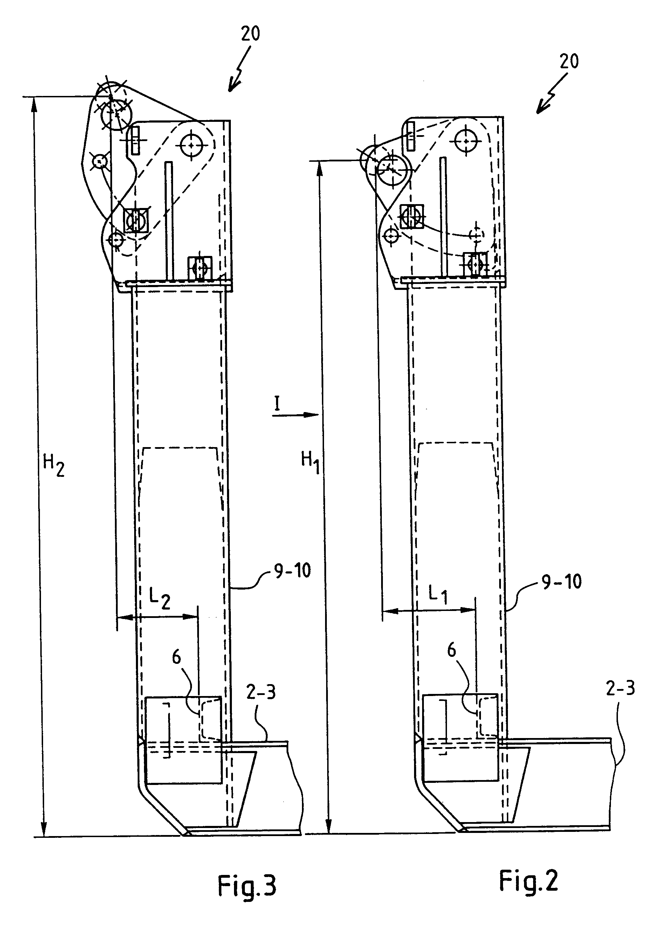

Dans la configuration des figures 2 et 4 à 6, l'équipage est en configuration abaissée. Le doigt radial 64 s'étend sensiblement à la verticale vers le bas en longeant la paroi de fond 29 et étant en appui contre l'extrémité 38 de la tige 37. L'équipage mobile est bloqué en position par la pénétration du doigt de blocage 40 dans le perçage 66 ddu flasque 61.

Dans cette configuration, l'anneau est à une première distance L₁ en avant de la traverse de butée 6 et à une première hauteur H₁ au dessus du flanc inférieur 8 des longerons de la berce.

Ces premières dimensions sont choisies conformes à une première norme, ici la norme AFNOR avec L₁=200 mm et H₁=1425 mm (voir figure 2).

Pour amener le barreau de préhension à une seconde distance en avant L₂ et à une deuxième hauteur H₂, conformes à une seconde norme, ici la norme DIN avec L₂=175 mm et H₂=1570, on écarte latéralement la tige de manoeuvre 21 (voir traits mixtes de la figure 6) en sorte de dégager l'extrémité 38 de la tige de la fente ménagée entre la plaque 30 et l'aile 27, ainsi que le doigt de blocage 40 vis à vis du perçage 66 du flasque 61 disposé dans l'autre fente : l'équipage pivotant 23 est alors libéré et peut être soulevé par tout moyen connu approprié, manuel ou motorisé, par exemple par le crochet de préhension d'un bras de chargement/déchargement, jusqu'à la configuration des figures 3 et 7 où le doigt radial 64 est en butée contre le rivet de retenue 32 et où le doigt de blocage 40 est en regard du second perçage 65 du flasque. Il suffit alors de rabattre la tige de manoeuvre 21 contre la colonne 10 pour verrouiller l'équipage pivotant dans cette seconde configuration de service.

Pour revenir à la première configuration, il suffit de répéter l'opération, à ceci près que la simple gravité suffit à provoquer le pivotement de cet équipage.

Bien entendu, il est à la portée de l'homme de métier de choisir l'emplacement de l'axe X-X et l'angle α de débattement à partir des grandeurs L₁, L₂, H₁, H₂ et de l'ensembrement envisageable pour cet équipement pivotant.

Dans les figures, ce sont les normes respectivement AFNOR et DIN qui sont prises en considération grâce à quoi la berce représentée est bi-standard DIN/AFNOR. Il est toutefois à la portée de l'homme de métier de concevoir sur le même principe des berces satisfaisant à deux (voire trois ou plus) autres normes, selon les besoins et les lieux d'utilisation.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Berce amovible (1) comportant deux longerons (2, 3) à une extrémité desquels est fixée une extension verticale (4) portant en son sommet un barreau de préhension (62), caractérisée en ce que ce barreau est porté par un ensemble porte-barreau (20) comportant un socle fixe (22) sur lequel est monté pivotant, autour d'un axe transversal (X-X), avec un débattement angulaire donné (α), un équipage pivotant (23) dont fait partie ce barreau (62), ce socle étant muni de moyens (40, 37) de blocage en pivotement de cet équipage pivotant, en une première configuration dans laquelle ce barreau est à une première distance (L₁) en avant d'une traverse (6) de la berce et à une première hauteur (H₁) par rapport aux longerons, et en une seconde configuration dans laquelle ce barreau vient en une seconde distance en avant (L₂) et à une seconde hauteur (H₂), ces premières distance et hauteur étant conformes à une première norme et ces secondes distance et hauteur étant conformes à une seconde norme.

2. Berce selon la revendication 1, caractérisée en ce que lesdites distance et hauteur sont conformes aux normes DIN et AFNOR.

3. Berce selon la revendication 1 ou la revendication 2, caractérisée en ce que le socle fixe (22) comporte deux fentes dans lesquelles coulissent en pivotement deux flasques parallèles (60, 61) raccordés l'un à l'autre par ce barreau (62).

4. Berce selon la revendication 3, caractérisée en ce que ces flasques sont conformés en secteurs angulaires centrés sur l'axe de pivotement, et le barreau de préhension (62) leur est rapporté en des coins supérieurs situés à distance de cet axe.

5. Berce selon la revendication 4, caractérisée en ce que l'un (60) de ces flasques comporte un doigt radial (64) adapté à venir circonférentiellement en butée contre une butée escamotable (38) et contre une seconde butée fixe (32).

6. Berce selon la revendication 5, caractérisée en ce que cette butée escamotable est l'extrémité d'une tige (37) parallèle à l'axe de pivotement est commandé en débattement rectiligne selon son axe par une tige de manoeuvre (21) articulée sur le socle (22).

7. Berce selon l'une quelconque des revendications 3 à 6, caractérisée en ce que les moyens de blocage comportent un doigt (40) parallèle à l'axe de pivotement, ayant un débattement rectiligne selon son axe commandé par une tige de manoeuvre (37) articulée sur le socle et adapté à pénétrer, ou non, dans l'un ou l'autre de deux perçages (65, 66) ménagés dans l'un des flasques, à une même distance de l'axe de pivotement (X-X) et décalés angulairement d'un angle égal audit débattement angulaire.

8. Berce selon l'une quelconque des revendications 3 à 7, caractérisée en ce que l'un (60) des flasques comporte un doigt radial (64) de positionnement de l'équipage pivotant en l'une ou l'autre de ses configurations, et l'autre flasque (61) comporte deux perçages décalés angulairement autour de l'axe de pivotement d'un angle égal à ce débattement angulaire et adaptés respectivement à recevoir, dans ces configurations, un doigt rétractable de blocage (40).

9. Berce selon la revendication 8, caractérisée en ce que le doigt radial (64) étant adapté à venir circonférentiellement en butée contre une butée fixe (32) et une butée escamotable (38), cette butée escamotable et ce doigt rétractable de blocage sont attelés à une même tige de manoeuvre (21) articulée sur le socle.

10. Berce selon l'une quelconque des revendications 3 à 9, caractérisé en ce que le socle comporte une pièce en U (26) dont la concavité est tournée vers l'avant de la berce, avec deux ailes (27, 28) longées par les fentes, une paroi de fond (29) et deux plaques horizontales de fixation (33, 34) s'étendent latéralement à l'opposé l'une de l'autre.

## Claims

1. A movable lifting cradle (1) comprising two longitudinal beams (2, 3) at one end of each of which a vertical extension (4) is fixed which carries at its top a holding bar (62), characterized in that this bar is carried by a bar-carrying assembly (20) comprising a fixed base (22) on which is mounted, to pivot with a predetermined angular displacement (α) about a transverse axis (X-X), a pivotable assembly (23) of which the said bar (62) forms a part, the said base (22) being equipped with means (40, 37) for blocking the pivoting of this pivotable assembly (23) in a first configuration in which the said bar is at a first distance (L₁) in front of a crossbeam (6) of the lifting cradle and at a first height (H₁) relative to the longitudinal beams, and in a second configuration in which the said bar is at a second distance (L₂) in front and at a second height (H₂), the first distance and height conforming to a first standard and the second distance and height conforming to a second standard.

2. A lifting cradle according to claim 1, characterized in that the said distances and heights conform to DIN and AFNOR standards.

3. A lifting cradle according to claim 1 or claim 2, characterized in that the fixed base (22) comprises two slots within which two parallel flanges (60, 61) connected to one another by the bar (62) pivotably slide.

4. A lifting cradle according to claim 3, characterized in that the said flanges are shaped as angular sectors which are centred on the pivoting axis and in that the holding bar (62) is connected to them at upper corners situated at a distance from the said axis.

5. A lifting cradle according to claim 4, characterized in that one (60) of the said flanges comprises a radial finger (64) adapted to come circumferentially to bear against a retractable stop (38) and against a second, fixed stop (32).

6. A lifting cradle according to claim 5, characterized in that the said retractable stop (38) is the end of a bar (37) parallel to the pivoting axis and its rectilinear displacement along its axis is controlled by a manoeuvring bar (21) articulated on the base (22).

7. A lifting cradle according to any one of claims 3 to 6, characterized in that the blocking means comprise a finger (40) parallel to the pivoting axis and having a rectilinear displacement along its axis controlled by a manoeuvring bar (37) articulated on the base and adapted to penetrate, or not, into one or the other of two apertures (65, 66) formed in one of the flanges at the same distance from the pivoting axis (X-X) and offset angularly by an angle equal to the said angular displacement.

8. A lifting cradle according to any one of claims 3 to 7, characterized in that one (60) of the flanges comprises a radial finger (64) for positioning the pivotable assembly in one or other of its configurations and the other flange (61) comprises two apertures offset angularly about the pivoting axis by an angle equal to the said angular displacement and respectively adapted to receive, in the said configurations, a retractable blocking finger (40).

9. A lifting cradle according to claim 8, characterized in that the radial finger (64) is adapted to come circumferentially to bear against a fixed stop (32) and a retractable stop (38), the said retractable stop and the said retractable blocking finger being attached to a common manoeuvring bar (21) articulated on the base.

10. A lifting cradle according to any one of claims 3 to 9, characterized in that the base comprises a U-shaped piece (26) the concavity of which faces towards the front of the lifting cradle (1) and comprising two wings (27, 28) bordered by the slots, a back wall (29) and two horizontal fixing plates (33, 34) extending laterally opposite one another.

## Patentansprüche

1. Absetzbarer Tragrahmen (1) mit zwei Längsholmen (2, 3), an an dren einem Ende ein senkrechtes Verlängerungsstück (4) fest angebracht ist, das an seiner Spitze einen Stab (62) zum Anhängen trägt, **dadurch gekennzeichnet**, daß der Stab an einer Stabtrageinheit (20) gelagert ist, die ein festes Unterteil (22) hat, an dem ein schwenkbarer Wagen (23), von dem der Stab (62) ein Teil ist, mit einem bestimmten Schwenkwinkel (α) um eine Querachse (X-X) schwenkbar montiert ist, und das mit Mitteln (40, 37) versehen ist zum drehfesten Verriegeln des schwenkbaren Wagens in einer ersten Stellung, in welcher sich der Stab in einem ersten Abstand (L₁) vor einer Traverse (6) des Tragrahmens und in einer ersten Höhe (H₁) mit Bezug auf die Längsholme befindet, und in einer zweiten Stellung, in welcher der Stab in einen zweiten Abstand (L₂) vor der Traverse und in eine zweite Höhe (H₂) kommt, wobei der erste Abstand und die erste Höhe einer ersten Norm und der Zweite Abstand und die zweite Höhe einer zweiten Norm entsprechen.

2. Tragrahmen nach Anspruch 1, **dadurch gekennzeichnet**, daß die Abstände und Höhen der DIN- bzw. AFNOR-Norm entsprechen.

3. Tragrahmen nach Anspruch 1 oder 2, **dadurch gekennzeichnet**, daß das feste Unterteil (22) zwei Spalte hat, in denen zwei parallele Flansche (60, 61) verschwenkend gleiten, die durch den Stab (62) miteinander verbunden sind.

4. Tragrahmen nach Anspruch 3, **dadurch gekennzeichnet**, daß die Flansche durch auf der Schwenkachse zentrierte, winklige Sektoren gebildet sind und der Stab (62) zum Anhängen an deren mit Abstand zu der Achse gelegenen oberen Ecken mit ihnen verbunden ist.

5. Tragrahmen nach Anspruch 4, **dadurch gekennzeichnet**, daß einer der Flansche (60) einen radialen Finger (64) aufweist, der in Umfangsrichtung in Anlage zu bringen ist gegen einen zurückziehbaren Anschlag (38) und gegen einen zweiten, festen Anschlag (32).

6. Tragrahmen nach Anspruch 5, **dadurch gekennzeichnet**, daß der zurückziehbare Anschlag das Ende einer zur Schwenkachse parallelen Stange (37) ist, die durch eine am Unterteil (22) angelenkte Betätigungsstange (21) in Richtung ihrer Achse geradlinig verschieblich steuerbar ist.

7. Tragrahmen nach einem der Ansprüche 3 bis 6, **dadurch gekennzeichnet**, daß die Verriegelungsmittel einen parallel zur Schwenkachse angeordneten Zapfen (40) aufweisen, der, durch eine am Unterteil angelenkte Betätigungsstange (21) gesteuert, in Richtung seiner Achse geradlinig verschieblich und wahlweise in Eingriff zu bringen ist in eine von zwei in einem der Flansche angebrachten Bohrungen (65, 66), die denselben Abstand von der Schwenkachse (X-X) haben und über einen Umfangswinkel versetzt liegen, welcher gleich dem Schwenkwinkel ist.

8. Tragrahmen nach einem der Ansprüche 3 bis 7, **dadurch gekennzeichnet**, daß einer der Flansche (60) einen radialen Finger (64) zur Positionierung des verschwenkbaren Wagens in der einen oder anderen seiner Stellungen trägt, während der andere Flansch (61) mit zwei Bohrungen versehen ist, die mit Bezug auf die Schwenkachse über einen Umfangswinkel versetzt sind, der gleich dem Schwenkwinkel ist, und in den genannten Stellungen mit einem zurückziehbaren Verriegelungszapfen (40) in Eingriff zu bringen sind.

9. Tragrahmen nach Anspruch 8, **dadurch gekennzeichnet**, daß der radiale Finger (64) in Umfangsrichtung in Anlage zu bringen ist gegen einen festen Anschlag (32) und einen zurückziehbaren Anschlag (38), wobei der zurückziehbare Anschlag und der zurückziehbare Verriegelungszapfen an derselben am Unterteil angelenkten Betätigungsstange (21) angebracht sind.

10. Tragrahmen nach einem der Ansprüche 3 bis 9, **dadurch gekennzeichnet**, daß das Unterteil ein mit Bezug auf den Tragrahmen nach vorn konkaves, U-förmiges Bauteil (26) aufweist mit zwei sich längs der Spalte erstreckenden Schenkeln (27, 28), einer Stegwand (29) und zwei horizontalen Befestigungsplatten (33, 34), die sich seitlich entgegengesetzt zueinander erstrecken.
